# EUROPÄISCHE PATENTANMELDUNG

(11) **EP 1 870 655 A2**
(43) Veröffentlichungstag der Anmeldung: **26.12.2007**
(21) Anmeldenummer: 07105456.3
(22) Anmeldetag: 02.04.2007
(51) Int. Cl.: F28D 7/12, F28F 13/08, F01N 5/02

(54) **Wärmeübertragungseinheit für eine Verbrennungskraftmaschine**

(30) Priorität: 24.06.2006 DE 102006029043
(71) Anmelder: Pierburg GmbH, 41460 Neuss (DE)
(72) Erfinder: Thomer, Oliver, 47877, Willich (DE); Thönneßen, Dieter, 41751, Viersen (DE); Rothuysen, Uwe, 47829, Krefeld (DE); Kühnel, Ulrich, 41239, Mönchengladbach (DE)
(74) Vertreter: Ter Smitten, Hans

(57) **Zusammenfassung**

Wärmeübertragungseinheiten für Verbrennungskraftmaschinen insbesondere zur Kühlung von Abgasen sind in verschiedenen Ausführungen bekannt. Zur Erhöhung der Kühlleistung und Verringerung des maximalen Strömungsverlustes wird vorgeschlagen, dass der durchströmte Querschnitt des vom zu kühlenden Gas durchströmten Kanals (2) in Hauptströmungsrichtung vom Einlass (7) zu einem Auslass (8) mit sinkender Temperatur des zu kühlenden Gases entsprechend eines an einer bestimmten Position vorliegenden Wärmeübergangs zur Optimierung dessen, verändert wird. Hierdurch kann auch eine konstante Strömungsgeschwindigkeit und eine wachsende Kühlleistung eingestellt werden.

## Beschreibung

Die Erfindung betrifft eine Wärmeübertragungseinheit für eine Verbrennungskraftmaschine, insbesondere zur Kühlung von Abgasen, mit einem Gehäuse, in dem ein von einem zu kühlenden Gas durchströmter Kanal und ein von einem Kühlfluid durchströmter Kanal ausgebildet sind, welche durch eine oder mehrere Trennwände voneinander getrennt sind, wobei am Gehäuse ein erster Einlass und ein erster Auslass für das zu kühlende Gas sowie ein zweiter Einlass und ein zweiter Auslass für das Kühlfluid ausgebildet sind.

Wärmeübertragungseinheiten für Verbrennungskraftmaschinen sind allgemein bekannt und werden in einer Vielzahl von Anmeldungen beschrieben. Sie dienen beispielsweise zur Kühlung der Ladeluft einer Verbrennungskraftmaschine oder auch zur Kühlung von Öl oder Abgas. So sind verschiedene Bauformen derartiger Wärmeübertragungseinheiten beschrieben worden. Zu nennen sind hier beispielsweise Plattenwärmetauscher oder Rohrbündelwärmetauscher. Als Kühlfluid dient dabei zumeist die Kühlflüssigkeit der Verbrennungskraftmaschine. In letzter Zeit wurden insbesondere zur Abgaskühlung auch mehrteilige Wärmeübertragungseinheiten aus Aluminiumdruckguss bekannt, wodurch die Abgaskühler in ihrem Aufbau sehr einfach und kostengünstig herstellbar sind.

So wird in der DE 20 2004 003 131 U1 ein U-förmig durchströmter Abgaswärmetauscher aus Aluminiumdruckguss beschrieben, der einen vom Kühlmittel durchströmten Mantel zur Kühlung der Abgase aufweist. Der vom Kühlmittelmantel umströmte Abgaskanal wird U-förmig durchströmt, d. h., dass sich Ein- und Auslass an der gleichen Stirnseite des Kühlers befinden. Im Abgas führenden Kanal ist hierzu eine Trennwand angeordnet.

Des Weiteren ist es beispielsweise aus der DE 103 21 533 A1 bekannt, in den Abgaskanal derartiger Druckgusswärmetauscher Rippen hineinragen zu lassen um den Wärmeübergang zu verbessern. Diese können sich sowohl entlang der Hauptströmungsrichtung über die gesamte durchströmte Länge oder in Form von kurzen unterbrochenen und versetzt zueinander angeordneten Rippen in den Kanal erstrecken.

Diese bekannten Wärmeübertragungseinheiten weisen jedoch den Nachteil auf, dass die Kühlleistungen für den vorhandenen Bauraum zum Teil nicht ausreichend sind und insbesondere durch den Einbau der Rippen im Kanal ein relativ hoher Druckverlust entsteht.

Daher ist es Aufgabe der Erfindung eine Wärmeübertragungseinheit bereit zu stellen, mit der die Kühlleistung weiter gesteigert werden kann, wobei die auftretenden Druckverluste verringert werden sollen.

Diese Aufgabe wird dadurch gelöst, dass der durchströmte Querschnitt des vom zu kühlenden Gas durchströmten Kanals im Bereich des ersten Einlasses größer ist als im Bereich des ersten Auslasses. Insbesondere bei kleinen auftretenden Temperaturgradienten, wie sie im Bereich des Auslasses in üblich aufgebauten Wärmetauschereinheiten auftreten, verschlechtert sich der Wärmeübergang oder der Eintrittsquerschnitt ist so klein, dass ein extrem hoher Druckverlust auftritt. Durch den beanspruchten Wärmetauscher liegt im Bereich des Auslasses eine höhere Strömungsgeschwindigkeit vor als bei bekannten Wärmetauschern, was zu einem verbesserten Wärmeübergang im Auslassbereich führt. Diese höhere Geschwindigkeit verringert auch die Dicke der isolierend wirkenden Grenzschicht, was ebenfalls eine Verbesserung des Wärmeübergangs bewirkt. Der Druckverlust im Eingangsbereich wird reduziert.

Vorzugsweise verändert sich der durchströmte Querschnitt des vom zu kühlenden Gas durchströmten Kanals in Hauptströmungsrichtung vom ersten Einlass zum ersten Auslass durch Konturierung begrenzender Seitenwände abschnittsweise. Auf diese Weise wird es möglich, die Kühlleistung in jedem Abschnitt des Wärmetauschers entsprechend des vorliegenden Temperaturgradienten und der vorliegenden Strömungsgeschwindigkeit anzupassen. Die Festlegung des optimalen Querschnitts kann beispielsweise durch Versuche stattfinden, bei denen der Wärmeübergang für jeden Abschnitt bei vorliegenden Bedingungen berechnet und gemessen wird.

So hat es sich ergeben, dass eine vorteilhafte Ausgestaltung bereits entsteht, indem sich der durchströmte Querschnitt des vom zu kühlenden Gas durchströmten Kanals in Hauptströmungsrichtung vom ersten Einlass bis zum ersten Auslass mit sinkender Temperatur des zu kühlenden Gases im Wesentlichen stetig verringert. Im Vergleich zu bekannten Wärmeübertragungseinheiten mit konstantem durchströmten Querschnitt wird hierdurch eine Verringerung der Strömungsgeschwindigkeit im gesamten Verlauf der Durchströmung durch die Verringerung der Temperatur und somit der Dichte des Gases verhindert. Insbesondere für kleinere Temperaturgradienten also im Bereich des Auslasses wird zwischen dem Kühlfluid und dem zu kühlenden Gas durch die höhere erreichte Strömungsgeschwindigkeit der Wärmeübergang und somit die Kühlleistung der Wärmeübertragungseinheit deutlich verbessert. Gleichzeitig wird die Strömungsgeschwindigkeit durch einen gegebenenfalls größeren Eintrittsquerschnitt am Einlass herabgesetzt und somit der Druckverlust am Einlass verringert.

In einer bevorzugten Ausführungsform verringert sich der durchströmte Querschnitt des vom zu kühlenden Gas durchströmten Kanals in Hauptströmungsrichtung derart, dass sich eine im Wesentlichen konstante Strömungsgeschwindigkeit des zu kühlenden Gases einstellt. Hierbei findet eine Optimierung zwischen dem bei steigender Geschwindigkeit steigenden Druckverlust und der Verbesserung der Kühlleistung bei steigender Strömungsgeschwindigkeit statt, wobei die höchste Strömungsgeschwindigkeit am Einlass und somit der höchste auftretende Druckverlust jedoch bei gleicher Baugröße verringert werden kann. Der Druckverlust steigt somit nur noch in Hauptströmungsrichtung in dem Maße, in dem die Dichte des Gases abnimmt und sich der Verlustbeiwert aufgrund sich ändernder Geometrie verändert. Es wird jedoch eine Unabhängigkeit von der sich quadratisch auf den Druckverlust auswirkenden Strömungsgeschwindigkeit erreicht.

In einer bevorzugten Ausführungsform verringert sich in Hauptströmungsrichtung der Abstand zwischen den begrenzenden Seitenwänden des vom zu kühlenden Gas durchströmten Kanals. Es wird somit eine einfach herzustellende Bauform beibehalten und das Ziel der Steigerung der Kühlleistung bei optimiertem Druckverlust auf einfache Art und Weise erreicht.

In einer hierzu weiter führenden Ausführungsform ist der vom zu kühlenden Gas durchströmte Kanal U-förmig ausgebildet und durchströmt, wobei zur Verringerung des Querschnitts in Hauptströmungsrichtung eine den hin- vom zurückströmenden Gasstrom trennende Mittelwand relativ zu den Trennwänden schräg angeordnet ist. Durch eine derartige Ausführungsform wird ein Kühler geschaffen, der einen geringen Platzbedarf aufweist, wobei die äußere Bauform im wesentlichen weiterhin aus geraden Wänden besteht, was den Einbau in einer Verbrennungskraftmaschine bei geringem vorhandenen Platzbedarf erleichtert.

In einer alternativen oder weiterführenden Ausführungsform verringert sich in Hauptströmungsrichtung der Abstand zwischen in den vom zu kühlenden Gas durchströmten Kanal ragenden Rippen. Bei einer derartigen Ausführungsform können entweder zusätzlich zu einer schrägen Seitenwand die Rippen derart angeordnet werden, dass sich der Querschnitt zusätzlich verengt oder aber die gesamte Querschnittsverengung wird durch die Rippen hergestellt. In beiden Fällen wird bei optimiertem Druckverlust eine Kühlleistungssteigerung im Vergleich zu bekannten Ausführungen erreicht.

In einer besonderen Ausführungsform erfolgt die Verringerung des Abstandes zwischen den Rippen durch Verbreiterung der Rippen in Hauptströmungsrichtung. Mit einer derartigen Ausführungsform ist auf relativ einfache Weise durch entsprechende Berechnung die notwendige Breite zur Konstanthaltung der Strömungsgeschwindigkeit zu errechnen und in entsprechende Formen für den Druckguss zu übertragen.

In einer hierzu alternativen Ausführungsform erfolgt die Verringerung des Abstandes zwischen den Rippen durch Erhöhung der Anzahl der Rippen in Hauptströmungsrichtung. Mit einer derartigen Ausführung ist es wiederum möglich über den gesamten Strömungsweg eine optimierte Kühlrippenform zu verwenden um den Wärmeübergang weiter zu optimieren und den Druckverlust herabzusetzen.

Mit all diesen Ausführungen ist eine Steigerung der Kühlleistung für Wärmeübertragungseinheiten erreichbar, wobei Druckverlustmaxima verringert werden können und somit der insgesamt auftretende Druckverlust im Verhältnis zur Kühlleistung optimiert werden kann. Der Aufbau und die Herstellung bleiben einfach und kostengünstig.

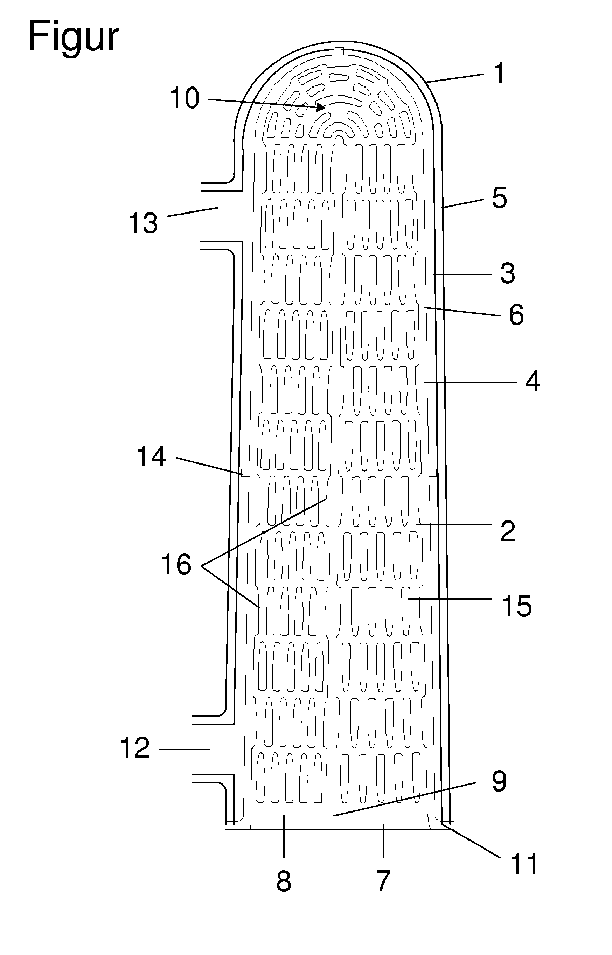

Ein Ausführungsbeispiel ist schematisch in der Figur dargestellt und wird nachfolgend beschrieben.

Die Figur zeigt eine Draufsicht einer erfindungsgemäßen Wärmeübertragungseinheit in geschnittener Darstellung.

Die in der Figur dargestellte Wärmeübertragungseinheit, welche insbesondere zur Kühlung von Abgasen einer Verbrennungskraftmaschine dient, besteht aus einem Gehäuse 1, in dem ein von einem zu kühlenden Gas durchströmter Kanal 2 sowie ein von einem Kühlfluid durchströmter Kanal 3 angeordnet sind. Das Gehäuse 1 besteht aus einer ein- oder mehrteiligen Innenschale 4, sowie einer die Innenschale 4 umgebenden Außenschale 5, welche im Wesentlichen beabstandet von der Innenschale 4 angeordnet ist.

Der vom Kühlfluid durchströmte Kanal 3 ist in vorliegendem Ausführungsbeispiel zwischen der Innenschale 4 und der Außenschale 5 angeordnet, während der vom zu kühlenden Gas durchströmte Kanal 2 durch die Innenschale 4 begrenzt wird. Somit bildet die Innenschale 4 eine Trennwand 6 zwischen den beiden in Wärmeaustausch stehenden Fluiden.

Die Innenschale 4 ist einseitig offen ausgebildet und weist an ihrer offenen Stirnseite einen ersten Einlass 7 sowie einen daneben angeordneten ersten Auslass 8 auf, welche durch eine Mittelwand 9, die sich vom ersten Einlass 7 bis zu einem Umkehrbereich 10 der Wärmeübertragungseinheit erstreckt, voneinander getrennt sind. Im Umkehrbereich 10 endet die Mittelwand 9 in einem Abstand zur zum Einlass 7 und dem Auslass 8 entgegengesetzten Stirnseite der Wärmeübertragungseinheit, der in etwa dem Abstand zwischen der Mittelwand 9 und der Trennwand 6 am Einlass 7 bzw. am Auslass 8 entspricht. Entsprechend wird das im Kanal 2 strömende Gas in diesem Bereich U-förmig umgelenkt und strömt vom Einlass 7 über den Umkehrbereich 10 zum neben dem Einlass 7 angeordneten Auslass 8.

Im Einlass- bzw. Auslassbereich weist die Innenschale 4 zusätzlich eine flanschförmige Erweiterung 11 auf, über die die Außenschale 5 an der Innenschale 4 beispielsweise durch Rührreibschweißen befestigt werden kann. Gleichzeitig dient diese flanschförmige Erweiterung zum Verschluss des vom Kühlfluid durchströmten Kanals 3.

Die Außenschale 5 weist einen zweiten Einlass 12 sowie einen zweiten Auslass 13 auf, welche in vorliegendem Ausführungsbeispiel im Bereich der Stirnseiten der Wärmeübertragungseinheit, jedoch seitlich an der Außenschale angeordnet sind. An der Innenschale 4 sind zusätzlich Stege 14 angeordnet, die für eine Zwangsführung des Kühlfluids sorgen, so dass das Kühlfluid nicht unmittelbar vom Einlass 12 zum Auslass 13 strömen kann, sondern sicher gestellt wird, dass der gesamte vom Kühlfluid durchströmte Kanal 3 kontinuierlich mit neuem Kühlmittel versorgt wird und Todwassergebiete vermieden werden. Eine derartige Zwangsführung durch die Stege 14 kann beispielsweise schraubenförmig oder mäanderförmig erfolgen.

Von den Trennwänden 6 der Innenschale 4 ragen Rippen 15 in den vom zu kühlenden Gas durchströmten Kanal 2, wodurch der Wärmeübergang zwischen den beiden Fluiden deutlich verbessert wird und gleichzeitig bei entsprechender Formgebung und durch den Einsatz der Wärmeübertragungseinheit als Abgaskühler eine Verrußung bzw. Versottung vermieden werden kann. Diese Rippen 15 sind auch in Form von Ausbuchtungen 16 an der Mittelwand 9 bzw. den Trennwänden 6 weitergeführt, so dass auch bei versetzt in Reihen hintereinander angeordneten Rippen die durchströmten Querschnitte im Bereich einer Rippenreihe weitestgehend konstant gehalten werden können, ohne die Rippenform verändern zu müssen.

Die Trennwand 6 sowie die Mittelwand 9 bilden somit den Gas durchströmten Kanal 2 begrenzende Seitenwände, welche erfindungsgemäß so zueinander angeordnet sind, dass sich der durchströmbare Querschnitt zwischen den Seitenwänden 6, 9 vom Einlass 7 zum Auslass 8 verringert. Im vorliegenden Ausführungsbeispiel wird diese Querschnittsverengung dadurch erreicht, dass die Mittelwand 9 im Bereich des Einlasses 7 einen größeren Abstand zur Trennwand 6 aufweist als im Bereich des Auslasses 8. Die Mittelwand 9 ist somit im Verhältnis zu den Trennwänden 6 über ihre gesamte Länge leicht schräg in der Wärmeübertragungseinheit angeordnet beziehungsweise in einem kleinen Winkel zu den Trennwänden angestellt angeordnet. Hierdurch wird eine kontinuierliche Verengung des durchströmten Querschnitts in Hauptströmungsrichtung erreicht, obwohl mit Ausnahme des Umkehrbereichs 10 die Trennwände 6 weitestgehend parallel zueinander angeordnet sein können. Selbstverständlich wird der Abstand zwischen dem Ende der Mittelwand 9 und der den Umkehrbereich begrenzenden Trennwand 6 derart gewählt, dass keine Querschnittssprünge auftreten sondern die kontinuierliche Verengung in diesem Bereich weitergeführt wird. Entsprechend beträgt dieser Abstand in vorliegender Ausführung dem Mittelwert der jeweiligen Abstände zwischen Mittelwand 9 und Trennwand 6.

Des weiteren ist zu erkennen, dass die Anzahl der vorhandenen Rippen 15 im Kanal in jedem Abschnitt etwa gleich bleibt, so dass in vorliegendem Ausführungsbeispiel in jedem Querschnitt fünf Rippen angeordnet sind, wobei zu beachten ist, dass die Rippen 15 im Bereich des Einlasses 7 durch den größeren zur Verfügung stehenden Querschnitt deutlich größeren Abstand voneinander haben als die Rippen 15 im Bereich des Auslasses 8.

Selbstverständlich wäre es auch denkbar, statt einer Schrägstellung der Trennwand die Anzahl der Rippen zum Auslass 8 hin zu erhöhen.

Die Schrägstellung der Mittelwand 9 erfolgt zur Aufrechterhaltung einer konstanten Strömungsgeschwindigkeit oder einer für den lokalen Temperaturbereich optimierten Strömungsgeschwindigkeit in der Wärmeübertragungseinheit bzw. im vom zu kühlenden Gas durchströmten Kanal 2.

Bei Wärmeübertragungseinheiten bekannter Bauart, also mit konstantem durchströmten Querschnitt, besteht eine hohe Eintrittstemperatur sowie eine hohe Strömungsgeschwindigkeit und somit ein hoher Druckverlust am Einlass des Kanals. Am Auslass ist bei diesen Kühlern die Strömungsgeschwindigkeit als auch der Druckverlust aufgrund der höheren Dichte des Gases wegen seiner abnehmenden Temperatur im Kühler deutlich geringer. Hier entstehen jedoch Probleme bezüglich des Wärmeübergangs aufgrund des geringen vorhandenen Temperaturgradienten zwischen dem zu kühlenden Gas und dem Kühlfluid.

Bei der erfindungsgemäßen Wärmeübertragungseinheit wird zur Verringerung der Strömungsgeschwindigkeit am Einlass 7 der Querschnitt in diesem Bereich erweitert, so dass die Strömungsgeschwindigkeit und somit der quadratisch zur Strömungsgeschwindigkeit wachsende Druckverlust herabgesetzt werden. Über den gesamten Strömungsweg betrachtet kann hierdurch eine Herabsetzung des Gesamtdruckverlustes erreicht werden. Durch die schräge Anordnung der Mittelwand 9 oder durch Vorsehen einer größeren Anzahl an Rippen 15 zum Auslass 8 hin wird nun die Strömungsgeschwindigkeit konstant gehalten, indem der Querschnitt entsprechend der Kontinuitätsgleichung mit sinkender Temperatur und somit gemäß idealem Gasgesetz steigender Dichte verringert wird. Es besteht somit eine lineare Abhängigkeit zwischen der Dichte und dem gewählten Querschnitt.

Des Weiteren wurde gefunden, dass der Wärmeübergang durch die Dicke der lokalen Grenzschicht beeinflusst wird und ein starker Einfluss über den lokalen Temperaturgradienten zwischen dem zu kühlenden Gas und dem Kühlfluid besteht. Insbesondere bei kleinen auftretenden Temperaturgradienten, wie sie insbesondere im Bereich des Auslasses in üblich aufgebauten Wärmetauschereinheiten auftreten, sinkt daher der Wärmeübergang deutlich. So ergeben sich jedoch für die erfindungsgemäße Wärmetauschereinheit die Vorteile, dass die im Bereich des Auslasses 8 die lokale Strömungsgeschwindigkeit durch den geringeren Querschnitt angehoben wird, wodurch Wärmeübergang und Kühlleistung verbessert werden. Diese höhere Geschwindigkeit verringert auch die Dicke der isolierend wirkenden Grenzschicht, was ebenfalls eine Verbesserung des Wärmeübergangs bewirkt.

Es wird somit deutlich, dass je nach Schrägstellung der Mittelwand 9 im Kanal 2 die Strömungsgeschwindigkeit eingestellt und somit die Kühlleistung deutlich angehoben werden kann. Gleichzeitig kann der maximal im Wärmetauscher auftretende Druckverlust deutlich reduziert werden, da die Maximalströmungsgeschwindigkeit herabgesetzt wird, mit der der Druckverlust quadratisch ansteigt.

Es sollte deutlich sein, dass die Erfindung nicht auf die vorbeschriebene Ausführungsform beschränkt ist, sondern Änderungen bezüglich der Ausführung der Wärmeübertragungseinheit, beispielsweise bezüglich der Anordnungen des Kühlfluid durchströmten Kanals 3 oder der Herstellung der Wärmeübertragungseinheit, denkbar sind. So könnte beispielsweise der Kühlfluid durchströmte Kanal 3 vom Gas führenden Kanal 2 umgeben sein oder aber der Wärmetauscher als Platten- oder Rohrbündelwärmetauscher ausgeführt sein.

Auch ein von einer Stirnseite zur gegenüberliegenden Stirnseite durchströmter Wärmetauscher ohne Umlenkung ist ausführbar, so dass die Anordnung der Ein- und Auslässe weitestgehend frei wählbar ist.

Ebenfalls denkbar ist eine Konturierung der Mittelwand oder der Außenwände zur Einstellung einer gewünschten Strömungsgeschwindigkeit zur abschnittsweisen Optimierung des Wärmeübergangs, wobei nicht gezwungenermaßen eine stetige Querschnittsverkleinerung vorliegen muss.

## Patentansprüche

1. Wärmeübertragungseinheit für eine Verbrennungskraftmaschine, insbesondere zur Kühlung von Abgasen, mit einem Gehäuse, in dem ein von einem zu kühlenden Gas durchströmter Kanal und ein von einem Kühlfluid durchströmter Kanal ausgebildet sind, welche durch eine oder mehrere Trennwände voneinander getrennt sind, wobei am Gehäuse ein erster Einlass und ein erster Auslass für das zu kühlende Gas sowie ein zweiter Einlass und ein zweiter Auslass für das Kühlfluid ausgebildet sind, **dadurch gekennzeichnet, dass** der durchströmte Querschnitt des vom zu kühlenden Gas durchströmten Kanals (2) im Bereich des ersten Einlasses (7) größer ist als im Bereich des ersten Auslasses (8).

2. Wärmeübertragungseinheit nach Anspruch 1, **dadurch gekennzeichnet, dass** sich der durchströmte Querschnitt des vom zu kühlenden Gas durchströmten Kanals (2) in Hauptströmungsrichtung vom ersten Einlass (7) zum ersten Auslass (8) durch Konturierung begrenzender Seitenwände (6, 9) abschnittsweise verändert.

3. Wärmeübertragungseinheit nach Anspruch 1 oder 2, **dadurch gekennzeichnet, dass** sich der durchströmte Querschnitt des vom zu kühlenden Gas durchströmten Kanals (2) in Hauptströmungsrichtung vom ersten Einlass (7) zum ersten Auslass (8) mit sinkender Temperatur des zu kühlenden Gases im Wesentlichen stetig verringert.

4. Wärmeübertragungseinheit nach Anspruch 3, **dadurch gekennzeichnet, dass** sich der durchströmte Querschnitt des vom zu kühlenden Gas durchströmten Kanals (2) in Hauptströmungsrichtung derart verringert, dass sich eine im Wesentlichen konstante Strömungsgeschwindigkeit des zu kühlenden Gases einstellt.

5. Wärmeübertragungseinheit nach einem der vorhergehenden Ansprüche, **dadurch gekennzeichnet, dass** sich in Hauptströmungsrichtung der Abstand zwischen den begrenzenden Seitenwände (6, 9) des vom zu kühlenden Gas durchströmten Kanals (2) verringert.

6. Wärmeübertragungseinheit nach einem der vorhergehenden Ansprüche, **dadurch gekennzeichnet, dass** der vom zu kühlenden Gas durchströmte Kanal U-förmig ausgebildet und durchströmt ist, wobei zur Verringerung des Querschnitts in Hauptströmungsrichtung eine den hin- vom zurückströmenden Gasstrom trennende Mittelwand (9) relativ zu den Trennwänden (6) schräg angeordnet ist.

7. Wärmeübertragungseinheit nach einem der vorhergehenden Ansprüche, **dadurch gekennzeichnet, dass** sich in Hauptströmungsrichtung der Abstand zwischen in den vom zu kühlenden Gas durchströmten Kanal (2) ragenden Rippen (15) verringert.

8. Wärmeübertragungseinheit nach Anspruch 5, **dadurch gekennzeichnet, dass** die Verringerung des Abstandes zwischen den Rippen (15) durch Verbreiterung der Rippen (15) in Hauptströmungsrichtung erfolgt.

9. Wärmeübertragungseinheit nach Anspruch 5, **dadurch gekennzeichnet, dass** die Verringerung des Abstandes zwischen den Rippen (15) durch Erhöhung der Anzahl der Rippen (15) in Hauptströmungsrichtung erfolgt.
